(19) Europäisches Patentamt

European Patent Office

Office européen des brevets

(11) **EP 1 128 519 A1**

(12) **DEMANDE DE BREVET EUROPEEN**

(43) Date de publication:
    **29.08.2001 Bulletin 2001/35**

(51) Int Cl.⁷: **H02J 9/00**, G06F 1/32

(21) Numéro de dépôt: **01400394.1**

(22) Date de dépôt: **14.02.2001**

(84) Etats contractants désignés:
    **AT BE CH CY DE DK ES FI FR GB GR IE IT LI LU MC NL PT SE TR**
    Etats d'extension désignés:
    **AL LT LV MK RO SI**

(30) Priorité: **28.02.2000 FR 0002476**

(71) Demandeur: **Peugeot Citroen Automobiles SA 92200 Neuilly sur Seine (FR)**

(72) Inventeur: **Loth Siri Yuth 95140 Garges Les Gonesse (FR)**

(74) Mandataire:
    **Habasque, Etienne Joel Jean-François et al Cabinet Lavoix
    2, Place d'Estienne d'Orves
    75441 Paris Cédex 09 (FR)**

(54) **Système d'interface pour une station locale d'un réseau de transmission d'informations embarqué à bord d'un véhicule automobile**

(57) Ce système d'interface pour une station reliée à une borne positive d'une alimentation du réseau (2), à la masse (3) et à une paire (4) de conducteurs de transmission d'informations en différentiel (5,6), et raccordée à des entrées d'informations fugitives issues de boutons-poussoirs (7,8,9) et comportant une unité locale de traitement d'informations (10), commutable entre des états de veille et de réveil, est caractérisé en ce qu'il comporte des moyens de stockage d'énergie électrique (11) d'alimentation de moyens formant interface de réveil (12) et de moyens à bascule (13,14,15) adaptés pour fonctionner dans un premier mode de mémoire pour stocker les informations fugitives issues des boutons-poussoirs (7,8,9) lorsque l'unité locale (10) est en mode de veille, afin de permettre à celle-ci d'acquérir ces informations après son passage en mode de réveil, et dans un second mode de suiveur pour délivrer directement à l'unité locale (10), les informations issues des boutons-poussoirs (7,8,9) lorsqu'elle est en mode de réveil.

FIG.1

**Description**

La présente invention concerne un système d'interface pour une station locale d'un réseau de transmission d'informations embarqué à bord d'un véhicule automobile.

On connaît déjà dans l'état de la technique, des stations pour ce type de réseaux qui sont reliées à une borne positive d'une alimentation du réseau, à la masse et à une paire de conducteurs de transmission d'informations en différentiel et qui sont raccordées à des entrées d'informations fugitives issues de boutons-poussoirs.

De plus, de telles stations comportent également une unité locale de traitement d'informations commutable entre des états de veille et de réveil.

Le problème avec ce type de stations est que tant que l'unité locale est en mode de veille, elle ne peut pas détecter et traiter les informations fugitives issues des boutons-poussoirs.

On a alors proposé dans l'état de la technique, d'utiliser des temporisations permettant de maintenir pendant une période de temps prédéterminée, ces informations fugitives.

On conçoit que ceci présente un certain nombre d'inconvénients, car ce maintien des informations doit être assuré pendant une période de temps supérieure au temps de réveil et d'initialisation de l'unité locale.

Or, cette durée ne peut pas être fixée avec certitude.

Des informations fugitives peuvent alors être perdues.

Le but de l'invention est donc de résoudre ces problèmes.

A cet effet, l'invention a pour objet un système d'interface pour une station locale d'un réseau de transmission d'informations embarqué à bord d'un véhicule automobile, dans lequel la station est reliée à une borne positive d'une alimentation du réseau, à la masse et à une paire de conducteurs de transmission d'informations en différentiel, et est raccordée à des entrées d'informations fugitives issues de boutons-poussoirs et comporte une unité locale de traitement d'informations, commutable entre des états de veille et de réveil, caractérisé en ce qu'il comporte des moyens de stockage d'énergie électrique d'alimentation de moyens formant interface de réveil et de moyens à bascule adaptés pour fonctionner, dans un premier mode de mémoire pour stocker les informations fugitives issues des boutons-poussoirs lorsque l'unité locale est en mode de veille, afin de permettre à celle-ci d'acquérir ces informations après son passage en mode de réveil et dans un second mode de suiveur pour délivrer directement à l'unité locale, les informations issues des boutons-poussoirs lorsqu'elle est en mode de réveil.

L'invention sera mieux comprise à la lecture de la description qui va suivre, donnée uniquement à titre d'exemple et faite en se référant aux dessins annexés, sur lesquels :

- la Fig.1 représente un schéma synoptique illustrant la structure d'un système selon l'invention ;
- la Fig.2 représente un schéma électrique d'un tel système ; et
- la Fig.3 représente une table logique du fonctionnement de ce système.

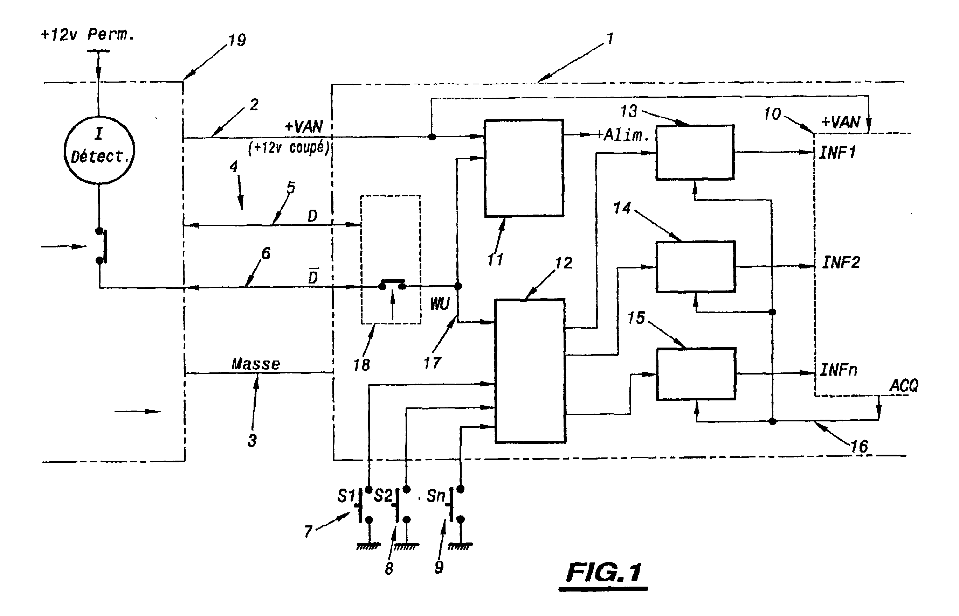

Le système d'interface selon l'invention est intégré par exemple dans une station locale, telle que celle désignée par la référence générale 1 sur la figure 1, d'un réseau de transmission d'informations embarqué à bord d'un véhicule automobile.

Cette station est reliée à une borne positive d'une alimentation du réseau telle que la ligne +VAN, désignée par la référence générale 2 sur cette figure 1, à la masse 3 et à une paire 4 de conducteurs 5,6 de transmission d'informations en différentiel de façon classique.

L'un de ces conducteurs, à savoir par exemple le conducteur 5, transmet en effet les informations D, tandis que l'autre de ces conducteurs, tel que par exemple le conducteur 6, transmet les informations complémentaires D correspondantes.

De plus, la station 1 est reliée à des entrées d'informations fugitives issues de boutons-poussoirs tels que par exemple les boutons-poussoirs S1, S2 et Sn décrits sur cette figure et désignés par les références générales 7,8 et 9.

Enfin, cette station comporte une unité locale de traitement d'informations, commutable entre des états de veille et de réveil, cette unité locale étant désignée par la référence générale 10 sur cette figure.

Selon l'invention, le système d'interface comporte également des moyens 11 de stockage d'énergie électrique formant réservoir d'alimentation destiné à alimenter des moyens formant interface de réveil, désignés par la référence générale 12 et des moyens à bascule par exemple 13,14 et 15 adaptés pour fonctionner dans un premier mode de mémoire pour stocker les informations fugitives issues des boutons-poussoirs correspondants, lorsque l'unité locale est en mode de veille, afin de permettre à celle-ci d'acquérir ces informations après son passage en mode de réveil et dans un second mode de suiveur, pour délivrer directement à l'unité locale, les informations issues des boutons-poussoirs lorsqu'elle est en mode de réveil.

Ces moyens sont alors adaptés pour passer d'un mode de fonctionnement à l'autre sous le contrôle de l'unité locale 10 par l'intermédiaire par exemple d'une ligne d'acquittement ACQ désignée par la référence générale 16 sur cette figure 1.

La sortie de ces bascules dont une est associée à chaque entrée fugitive d'informations, est alors délivrée à cette unité locale de traitement d'informations 10. Les entrées correspondantes de l'unité sont désignées par INF1, INF2 et INFn sur cette figure 1.

On conçoit alors qu'une telle structure permet à la station locale de recevoir des informations fugitives avant et pendant son réveil et de pouvoir les traiter après son réveil.

Cette structure est intégrée dans la station locale qui n'est pas alimentée en mode de veille.

Seul le conducteur 6 qui est utilisé pour réveiller ce système, assure son alimentation.

Ce système d'interface peut être basé sur l'utilisation de n bascules de type RS correspondant aux n boutons-poussoirs S1 à Sn décrits précédemment.

Chaque bascule RS a alors la particularité d'avoir deux modes de fonctionnement possible, l'un en mémoire et l'autre en suiveur.

En mode de mémoire, chaque bascule mémorise une action fugitive sur un bouton-poussoir correspondant, avant le réveil de l'unité locale de traitement d'informations et la restitue à l'entrée INF correspondante.

En mode de suiveur, chaque bascule recopie l'action sur chacun des boutons-poussoirs correspondants S1 à Sn, après le réveil de l'unité locale vers l'entrée INF correspondante.

Ces modes sont sélectionnés par la sortie d'acquittement ACQ de l'unité locale 10.

Les moyens 11 de stockage d'énergie électrique formant réservoir d'alimentation servent à alimenter en permanence ces bascules RS et à polariser l'interface de réveil.

Ces moyens sont alimentés par la ligne $\bar{D}$ en veille et relayés par le +VAN (+Alim.coupée) au réveil. Le niveau d'alimentation de ce réservoir doit donc être maintenu pendant au moins une période de temps T correspondant à la détection d'une demande de réveil et à l'arrivée du signal +VAN (+12v coupé).

L'interface de réveil 12 connecte chacun des boutons-poussoirs au conducteur $\bar{D}$ par l'intermédiaire d'une sortie WU, désignée par la référence générale 17 sur cette figure 1, d'un tampon 18, à l'entrée de chacune des bascules 13,14 et 15 pour une ou éventuellement plusieurs demandes de réveil.

Une telle structure permet alors à l'unité locale de traitement d'informations 10 de se réveiller et de se stabiliser avec suffisamment de temps pour acquérir les informations sans risquer la perte de celles-ci.

Les informations fugitives apparaissant avant le réveil de l'unité locale 10, sont donc mémorisées et restituées à celle-ci dès son réveil.

Après le réveil de cette unité locale , le maintien de la sortie d'acquittement ACQ de cette unité locale rend le système d'interface transparent entre ses entrées et ses sorties.

Trois fonctions essentielles sont donc utilisées dans ce système d'interface.

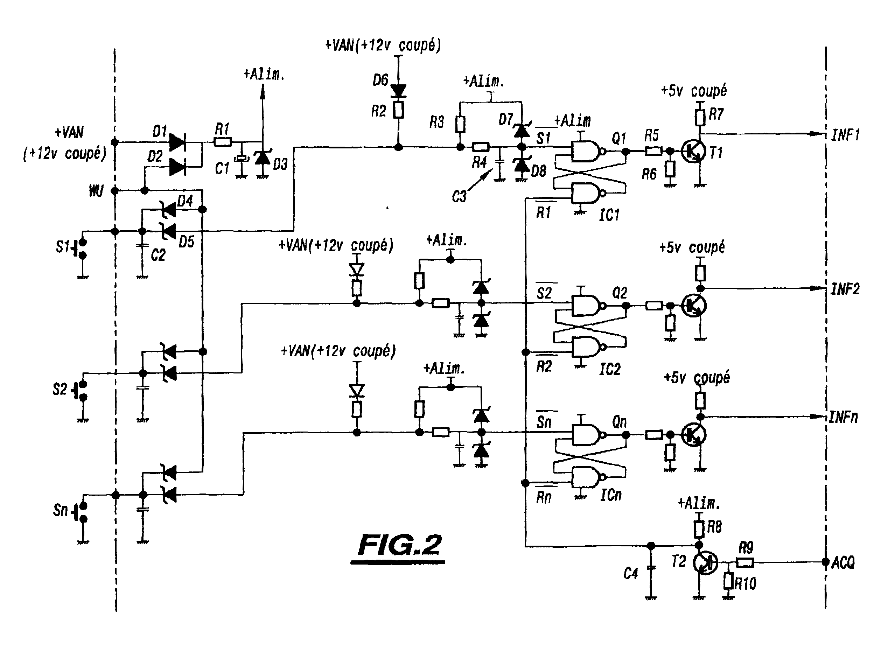

Ces fonctions sont décrites en détail en regard de la figure 2.

Pour des raisons de clarté de la description, seules les principales caractéristiques de ce schéma seront décrites plus en détail par la suite pour l'un des boutons-poussoirs S1 par exemple.

La fonction de réservoir d'alimentation est constituée de deux diodes D1 et D2, d'une résistance R1, d'un condensateur C1 et d'une diode Zener D3.

La diode D1 est reliée au +VAN (+12v coupé) afin de pouvoir charger le condensateur C1 pendant le réveil de l'unité locale.

La diode D2 est reliée à la borne WU similaire au conducteur $\bar{D}$ (+12v en état de veille), déconnectée en état de réveil et charge le condensateur C1 à travers la résistance R1 en état de veille.

La valeur du condensateur C1 est fixée de telle sorte que sa constante de décharge soit nettement supérieure au temps T correspondant au retard entre le moment de l'appui sur un bouton-poussoir et l'arrivée du +VAN.

La diode Zener D3 sert à limiter le niveau de charge du condensateur C1 et donc une éventuelle surtension.

La résistance R1 limite le courant de charge du condensateur C1 et le courant dans la diode D3.

L'interface de réveil est quant à lui composé de deux diodes Schottky D4 et D5 dont les cathodes sont reliées au bouton-poussoir S1 et couplées par un condensateur C2 pour éviter les interférences électromagnétiques. Une diode D6 dont l'anode est reliée au +VAN (+12v coupé) est montée en série avec une résistance R2 pour limiter le courant qui circule dans le bouton-poussoir S1 à travers une diode D5 en état de réveil.

Les résistances R3 et R4 et le condensateur C3 polarisent et filtrent au repos, le niveau d'entrée de la bascule IC1 correspondante au +ALIM. Des diodes D7 et D8 protègent et limitent le niveau d'entrée vers la bascule IC1 de type RS qui est formée par deux portes logiques NAND.

Comme cela a été indiqué précédemment, chaque bouton-poussoir a donc une bascule correspondante.

Ainsi, les boutons-poussoirs S1, S2 à Sn ont une bascule correspondante IC1, IC2, Icn.

Chacune de celles-ci est donc composée d'une bascule RS proprement dite et de son interface. La bascule RS est composée de deux portes NAND montées en cascade et alimentées en permanence par les moyens d'alimentation (+ALIM). Chaque sortie Q1 à Qn de ces bascules est reliée à son interface qui est composée d'un transistor T1 à canal N et de résistances R5,R6 et R7.

Ces interfaces servent à isoler les entrées de l'unité locale de traitement d'informations 10 en état de veille et à adapter le niveau logique en état de réveil.

Ces bascules sont initialisées, c'est-à-dire que les sorties Q1 à Qn sont égales à zéro, à la première mise sous tension du système grâce à la résistance R8 et au condensateur C4.

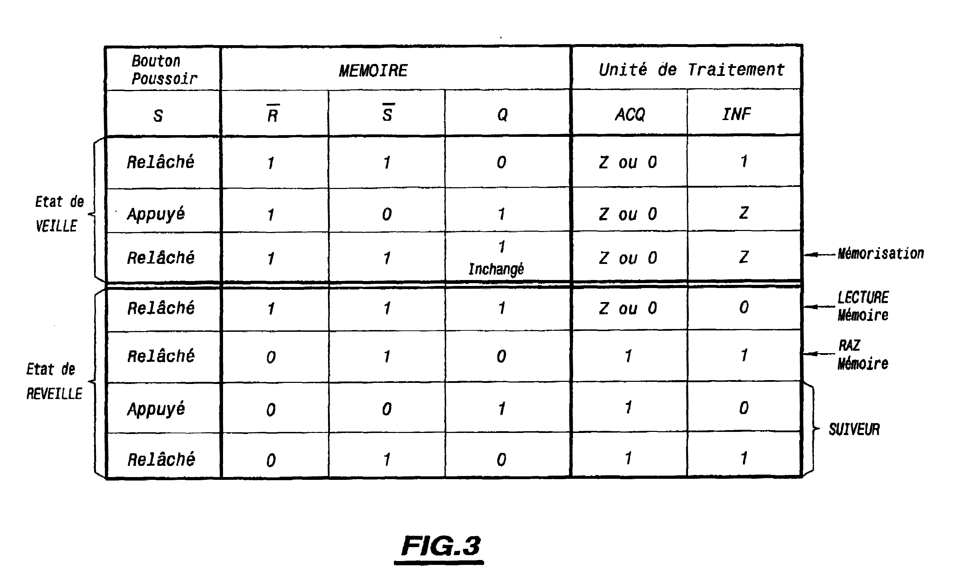

Le fonctionnement de ce système sera décrit par la suite en référence aux figures 2 et 3.

Lorsque l'unité centrale 19 est en état de veille et qu'aucune action n'est exercée sur un bouton, tel que par exemple le bouton-poussoir S1, le réservoir d'alimentation composé de la résistance R1, du condensateur C1, et de la diode D3, est chargé par le conducteur $\overline{D}$ (WU) à travers la diode D2.

Sa sortie nommée +ALIM polarise alors l'interface de réveil formé par la résistance R3, la résistance R4, le condensateur C3 et les diodes D7 et D8 et alimente la bascule IC1.

Les entrées $\overline{S1}$ et $\overline{R1}$ de la bascule correspondante sont alors au niveau logique 1, tandis que la sortie Q1 est à l'état logique O et bloque le transistor T1. Lors d'un appui fugitif sur le bouton S1, le conducteur $\overline{D}$ (WU) est tiré à la masse par la diode D4 et l'entrée $\overline{S1}$ de la bascule IC1 passe à l'état logique O par l'intermédiaire de la diode D5.

Comme l'entrée $\overline{R1}$ est toujours restée à l'état logique 1, la sortie Q1 de la bascule IC1 passe alors à l'état logique 1.

La mise à la masse du conducteur $\overline{D}$ (WU) réveille l'unité centrale 19 qui déconnecte le bus $\overline{D}$ (WU), mais connecte en même temps le +VAN (+12v coupé). Ce +VAN(+12v coupé) prend alors la relève pour charger le réservoir d'alimentation par l'intermédiaire de la diode D1.

Dès le réveil de l'unité centrale 19, le +VAN (+12v coupé) et le +5v coupé, sont rétablis.

L'unité locale de traitement d'informations 10 est alors alimentée et vient scruter les entrées INF1 à INFn. Comme la sortie Q1 de la bascule IC1 est à l'état logique 1, elle sature alors le transistor T1 et fournit un état logique 0 à INF1.

L'unité locale de traitement d'informations conclut alors qu'il y a eu une sollicitation de la part du bouton-poussoir S1 et réagit selon un programme prévu.

Après scrutation de ces différentes entrées INF1 à INFn, l'unité locale de traitement d'informations décide alors d'envoyer l'acquittement ACQ en modifiant l'état logique 0 de sa sortie ACQ, en un état logique 1. Cette sortie ACQ sature alors le transistor T2 qui ramène les entrées $\overline{R1}$ à $\overline{Rn}$ des bascules IC1 à ICn à l'état logique 0.

Ceci correspond à la mise à zéro de toutes les sorties Q1 à Qn des bascules IC1 à ICn.

Lors d'un appui sur le bouton-poussoir S1, et afin de pouvoir traiter les sollicitations des boutons-poussoirs $\overline{S1}$ à $\overline{Sn}$ en temps réel, l'unité locale de traitement d'informations doit maintenir sa sortie ACQ à l'état logique 1, ce qui revient à maintenir les entrées $\overline{R1}$ à $\overline{Rn}$ des bascules IC1 à ICn à l'état logique 0.

L'appui sur le bouton-poussoir S1 correspond à une mise à zéro de l'état logique S1 de la bascule IC1.

Le courant qui circule dans le bouton-poussoir S1 est de l'ordre de quelques milliampères, à travers la diode D6, la résistance R2, et la diode D5.

Si l'on se reporte à la table logique de la figure 3, la sortie Q1 et l'entrée INF1 de l'unité locale de traitement d'informations 10 suivent instantanément l'état d'appui ou de relâché de ce bouton-poussoir.

On trouvera ci-dessous un exemple de choix des différents composants utilisés.

| Résistances : | |
|---|---|
| R1 | 200 Ω |
| R2 | 2,2 KΩ |
| R3,R5,R6,R10 | 47 KΩ |
| R4 | 33 KΩ |
| R7 | 10 KΩ |
| R8,R9 | 20 KΩ |

| Condensateurs : | |
|---|---|
| C1 | 47μF |
| C2 | 1nF |
| C3 | 100nF |
| C4 | 2,2μF |

| Diodes : | |
|---|---|
| D1,D2,D6 | 1N4150 |
| D3 | BZX 84C15V |
| D4,D5,D7,D8 | BAT 42 |

| Transistors : | |
|---|---|
| T1,T2 | BC 817 |

| Circuits intégrés : | |
|---|---|
| IC1,...,ICn | 4011B-SOIC |

On conçoit alors qu'avec une telle structure, ce système présente une consommation négligeable en état de veille, par exemple de l'ordre de 0,4 μA, ce qui permet à celui-ci de s'alimenter sans difficulté à partir de n'importe quel conducteur de réveil.

Une telle structure permet alors de mémoriser un ou plusieurs appuis fugitifs de boutons-poussoirs dont les activations se sont passées avant le réveil de l'unité locale de traitement d'informations.

## Revendications

1. Système d'interface pour une station locale d'un réseau de traitement d'informations embarqué à bord d'un véhicule automobile, dans lequel la station (1) est reliée à une borne positive d'une alimentation du réseau (2), à la masse (3) et à une paire (4) de conducteurs de transmission d'informations en différentiel (5,6), et est raccordée à des entrées d'informations fugitives issues de boutons-poussoirs (7,8,9) et comporte une unité locale de traitement d'informations (10), commutable entre des états de veille et de réveil, **caractérisé en ce qu**'il comporte des moyens de stockage d'énergie électrique (11) d'alimentation de moyens formant interface de réveil (12) et de moyens à bascule (13,14,15) adaptés pour fonctionner dans un premier mode de mémoire pour stocker les informations fugitives issues des boutons-poussoirs (7,8,9) lorsque l'unité locale (10) est en mode de veille, afin de permettre à celle-ci d'acquérir ces informations après son passage en mode de réveil et dans un second mode de suiveur, pour délivrer directement à l'unité locale (10), les informations issues des boutons-poussoirs (7,8,9) lorsqu'elle est en mode de réveil.

2. Système selon la revendication 1, **caractérisé en ce que** les moyens de stockage d'énergie électrique (11) comprennent au moins un condensateur (C1).

3. Système selon la revendication 1 ou 2, **caractérisé en ce que** les moyens à bascule (13,14,15) comprennent des portes NAND.

4. Système selon l'une quelconque des revendications précédentes, **caractérisé en ce que** les moyens à bascule (13,14,15) sont adaptés pour commuter leur fonctionnement entre leur premier mode de mémoire et leur second mode de suiveur, sous le contrôle d'un signal d'acquittement (ACQ) émis par l'unité locale de traitement d'informations (10).

FIG.1

*FIG.2*

| Bouton Poussoir | MEMOIRE | | | Unité de Traitement | |
|---|---|---|---|---|---|
| S | $\overline{R}$ | $\overline{S}$ | Q | ACQ | INF |
| Relâché | 1 | 1 | 0 | Z ou 0 | 1 |
| Appuyé | 1 | 0 | 1 | Z ou 0 | Z |
| Relâché | 1 | 1 | 1 Inchangé | Z ou 0 | Z |
| Relâché | 1 | 1 | 1 | Z ou 0 | 0 |
| Relâché | 0 | 1 | 0 | 1 | 1 |
| Appuyé | 0 | 0 | 1 | 1 | 0 |
| Relâché | 0 | 1 | 0 | 1 | 1 |

Etat de VEILLE

Etat de REVEILLE

← Mémorisation

← LECTURE Mémoire

← RAZ Mémoire

SUIVEUR

## FIG.3

EP 1 128 519 A1

Office européen
des brevets

**RAPPORT DE RECHERCHE EUROPEENNE**

Numéro de la demande

EP 01 40 0394

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 764 099 A (HEWITT KENT) 9 juin 1998 (1998-06-09) * colonne 1, ligne 6 - colonne 3, ligne 20; figures 1,2 * | 1 | H02J9/00 G06F1/32 |
| A | EP 0 893 870 A (DEUTSCHE TELEKOM AG) 27 janvier 1999 (1999-01-27) * colonne 3, ligne 46 - colonne 4, ligne 56; figure 1 * | 1,2 | |
| A | US 4 115 705 A (MCELROY DAVID J) 19 septembre 1978 (1978-09-19) * colonne 5, ligne 1 - ligne 37; figure 7 * | 1 | |
| A | PATENT ABSTRACTS OF JAPAN vol. 014, no. 253 (P-1054), 30 mai 1990 (1990-05-30) & JP 02 066655 A (SUMITOMO ELECTRIC IND LTD), 6 mars 1990 (1990-03-06) * abrégé * | 1 | |
| A | US 5 481 222 A (UTZ HUBERT) 2 janvier 1996 (1996-01-02) * le document en entier * | 1 | DOMAINES TECHNIQUES RECHERCHES (Int.Cl.7) H02J G06F |

Le présent rapport a été établi pour toutes les revendications

| Lieu de la recherche | Date d'achèvement de la recherche | Examinateur |
|---|---|---|
| LA HAYE | 6 juin 2001 | Feuer, F |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 01 40 0394

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-06-2001

| Document brevet cité au rapport de recherche | | Date de publication | Membre(s) de la famille de brevet(s) | | Date de publication |
|---|---|---|---|---|---|
| US 5764099 | A | 09-06-1998 | EP<br>JP<br>WO | 0885476 A<br>11508431 T<br>9733354 A | 23-12-1998<br>21-07-1999<br>12-09-1997 |
| EP 0893870 | A | 27-01-1999 | DE | 19732299 A | 04-02-1999 |
| US 4115705 | A | 19-09-1978 | JP | 52155943 A | 24-12-1977 |
| JP 02066655 | A | 06-03-1990 | AUCUN | | |
| US 5481222 | A | 02-01-1996 | EP<br>JP | 0549165 A<br>5304722 A | 30-06-1993<br>16-11-1993 |

EPO FORM P0460

Pour tout renseignement concernant cette annexe : voir Journal Officiel de l'Office européen des brevets, No.12/82